# FASCICULE DE BREVET EUROPEEN

(11) **EP 0 751 812 B1**
(45) Date de publication et mention de la délivrance du brevet: **10.03.1999**
(21) Numéro de dépôt: 94911203.1
(22) Date de dépôt: 23.03.1994
(51) Int. Cl.: B01D 29/09, B01D 29/60, C13D 3/00

(54) **PROCEDE ET APPAREIL DE TRAITEMENT EN CONTINU DE LIQUIDES INDUSTRIELS DU DOMAINE AGRO-ALIMENTAIRE PAR FILTRATION SANS INTERMITTENCE**
VERFAHREN UND VORRICHTUNG ZUR KONTINUIERLICHEN FILTRIERBEHANDLUNG VON FLÜSSIGKEITEN DES AGRAR-LEBENSMITTELBEREICHS
METHOD AND APPARATUS FOR CONTINUOUSLY PROCESSING LIQUID EFFLUENTS FROM THE AGRI-FOODSTUFFS INDUSTRY BY NON-INTERMITTENT FILTRATION

(43) Date de publication de la demande: 08.01.1997
(73) Titulaire: Faivre, Philippe, 78650 Beynes (FR)
(72) Inventeur: Faivre, Philippe, 78650 Beynes (FR)
(86) Numéro de dépôt international: FR9400314
(87) Numéro de publication internationale: WO9525576

(56) Documents cités:
- DE-A- 3 739 496
- DE-U- 8 911 023
- FR-A- 1 235 090
- US-A- 4 865 724

## Description

L'invention concerne un procédé de traitement en continu de liquides industriels du domaine agroalimentaire par filtration sans intermittence à renouvellement automatique du média filtrant tel que défini dans la revendication 1. Notamment pour le traitement des jus troubles de première et de deuxième carbonatation obtenus lors de l'opération appelée épuration dans l'industrie sucrière de la betterave, ce procédé apporte des améliorations importantes.

Il est nécessaire de rappeler l'état actuel du process de l'épuration utilisé en sucrerie de betteraves.

Le jus provenant de l'opération précédente appelée DIFFUSION contient bien évidemment du sucre, mais également beaucoup d'autres éléments organiques tels des lipides, des protéines, de l'amidon, des saponines, (etc), qui empêcheront la concentration et la cristallisation du sucre dans les opérations industrielles suivantes. C'est pour enlever tous ces éléments perturbateurs que le jus de diffusion (A) ,appelé couramment jus vert, passe par une étape appelée EPURATION. Elle est rappellée brièvement sur le schéma du process classique de l'épuration de la planche n^{º} 1/3.

De façon synthétique, il s'agit de mélanger progressivement le jus vert avec du lait de chaux (C) dans une série de trois appareils:prémélangeur (1), préchauleur (2), chauleur (3) jusqu'à obtention d'un pH de 12 à 13,5: le lait de chaux se fixe sur les molécules organiques indésirables, mais pas sur les molécules de sucre solubles, elles, dans l'eau. Ce jus, appelé jus chaulé, est réchauffé par de l'eau chaude à contre-courant dans des échangeurs (4) puis par de la vapeur dans des réchauffeurs tubulaires (5); le jus chaulé est homogénéisé dans un bac (6), puis envoyé dans une chaudière à carbonater (8) par un prémélangeur (7).L'opération, appelée CARBONATATION DE 1ère, permet, par contact avec du gaz carbonique, de précipiter le lait de chaux en carbonate de calcium.

Le carbonate de calcium, substance solide, entoure littéralement les molécules organiques indésirables, permettant ainsi leur élimination par filtration. Le jus alors obtenu, appelé jus trouble de première carbonatation, ou JT1 (E), passe par un bac de stabilisation, (10).

Une pompe remplit en permanence un bac d'alimentation (11) situé en hauteur, dont le rôle est d'alimenter des appareils de filtration (12), appelés filtres de 1ére, desquels il sort, d'une part une phase très concentrée en carbonate de calcium: les BOUES DE 1ére(B), et d'autre part, un filtrat appelé JUS FILTRE DE 1ére CARBONATATION ou JF1 (F).

Les boues de 1ére sont envoyées elles-mêmes à partir d'un bac (13), sur des filtres rotatifs à toile (14) fonctionnant sous vide (15,16,17,18).Il produit une phase extrèmement concentrée en carbonate de calcium sous forme de gâteaux appelés ECUMES et un filtrat appelé PETIT JUS dont une partie sert à fabriquer le lait de chaux en diluant de la pierre à chaux cuite, l'autre partie étant recyclée dans le bac à jus filtré 1 (20).

Le jus filtré 1 est ensuite réchauffée par de l'eau chaude à contre-courant dans des échangeurs (21), puis remélangée avec du gaz carbonique (opération appelée carbonatation de 2ème) dans une chaudière à carbonater (22);on obtient du jus trouble de 2ème carbonatation (JT2), envoyé dans un bac de stabilisation (24).

Le fait de doubler l'opération de carbonatation de 1ére permet d'éliminer les molécules organocarboniques indésirables les plus fines.

Le JT2 est lui-même envoyé sur des filtres (25) (opération appelée FILTRATION DE 2ème) dont il sort une phase liquide concentrée en carbonates de calcium,appelées BOUES DE 2ème (D),beaucoup moins dense que celle obtenue en filtration de 1ére, et un filtrat (G).

Ce filtrat contient environ 14 à 15g de sucre pour 100ml et des ions minéraux libres, avec une prépondérance d'ions calcium apportés par le lait de chaux et n'ayant pas été précipités par les deux opérations de carbonatation.

Selon les sucreries, les boues de deuxième sont recyclées à partir d'un bac (26) soit en boues de première, soit en jus chaulé, soit en JT1. Chacun de ces recyclages pose des problèmes: en boues de 1ère et en JT1, les boues de 2ème amènent une dilution non souhaitée car elles augmentent le débit de mélange liquide-solide à traiter en filtration et risquent en cas de non maitrise des paramètres de l'épuration (phase de démarrage de l'usine ou de traitement de betteraves dégelées) d'engorger la capacité de filtration concernée.

Le recyclage des boues de 2ème en jus chaulé amène une concentration en fines particules de carbonate de calcium non souhaitée car provoquant des dépots sur les échangeurs dans lesquels passe le jus chaulé pour être réchauffé à la température adéquate afin d'assurer le rendement optimum de la carbonatation.

Le jus filtré 2 est ensuite envoyé en décalcification puis en évaporation.

Les appareils de filtration couramment utilisés pour les opérations de 1ére et de 2ème filtration (appareils 12 et 25: voir schéma du process classique de l'épuration sur la planche 1/3) sont conçus de façon identique et ne diffèrent que par des surfaces filtrantes et des finesses de médias filtrants différentes.

Ils se présentent sous la forme de bac cylindrique dont le fond est tronconique. Ils sont munis en partie supérieure d'un couvercle.Les médias filtrants sont des tissus, souvent à base de polyamides, recouvrants à la façon de chaussettes des cadres metalliques grillagés. Ces cadres sont suspendus et fixés dans le bac cylindrique de telle façon que la connexion permettant la sortie du jus filtré hors du cadre se fasse dans un collecteur central situé hors du bac cylindrique.

Ces cadres sont démontables à condition que les filtres soient arrêtés et le couvercle démonté. Un opérateur desserre l'écrou de connexion du cadre au collecteur de sortie, répète cette opération autant de fois qu'il y a de cadres, puis élingue l'ensemble des cadres sur un palan et assure la levée du tout.Il redépose ensuite cette ensemble et assure le déshabillage des toiles. Il est nécessaire de rappeler que les jus sont à environ 80°C et que les toiles lors du démontage sont pleines de gâteaux: les conditions de travail sont donc épouvantables.

Une fois les toiles enlevées, elles sont rapidement nettoyées à l'eau chaude pour enlever les boues restant collées et mises, soit dans un bain d'acide chlorhydrique dilué, soit dans une machine à laver utilisant également l'acide chlorhydrique dilué comme produit de nettoyage.

Cette opération de démontage dure entre une et deux heures et se renouvelle à peu près tous les deux à trois jours en fonction de la filtrabilité des jus qui dépend beaucoup des réglages de l'épuration, difficiles eux-mêmes à stabiliser car la composition des jus verts dépend du terroir dans lequel sont cultivées les betteraves, du temps passé par les betteraves hors de terre depuis l'arrachage et de l'état sanitaire de celles-ci: par exemple, des betteraves préalablement gelées, en cours de dégel, peuvent provoquer un blocage de la filtration si certains points de réglage de l'épuration ne sont pas suivis de façon très pointue et rigoureuse.

En cours de fonctionnement, les filtres sont alimentés en jus trouble (de 1ére ou de 2ème) par le haut ou par le bas du bac cylindrique selon les constructeurs, et ce en un, deux, ou plusieurs points.Le fait d'alimenter le filtre par le haut, permet d'assurer en même temps qu'une filtration, une décantation des particules les plus lourdes.

Pour chaque cadre, le jus passe à travers la toile, puis la grille et rejoint le collecteur central à jus filtré par une tuyauterie munie d'une vanne. Cette vanne permet, en cas de perçage de la toile, d'éviter le passage du jus. Il est évident que cela nécessite une surveillance rigoureuse en production, d'autant plus lourde que le nombre de filtre est plus élevé. Or, le nombre de filtre est d'autant plus élevé que la capacité de l'usine est importante, et, en cas de conditions difficiles (traitement de betteraves dégelées), le nombre de filtres à l'arrêt augmente rapidement, au point que cet atelier devienne le point bouchon de l'usine. A titre indicatif, pour une usine de 16000t/j de betteraves, une filtration de 1ére possède 12 filtres, et une filtration de 2ème en possède 7.

Si, en conditions normales, 10 filtres sur 12 fonctionnent, cela peut passer à 7 ou 8 lors de conditions difficiles: il s'ensuit que l'usine doit diminuer sa production à cause de la filtration.

Par ailleurs, lors des démarrages de filtre avec des toiles neuves ou propres, beaucoup de carbonate de calcium passe en jus filtré, ce qui est néfaste pour la suite des opérations, surtout si cela se produit en filtration de 2ème. Là encore, il est nécessaire d'assurer une surveillance stricte afin d'orienter les premiers filtrats dans les recyclages mentionnés plus haut.

Enfin, les boues sortent par le bas du filtre, c'est à dire par la pointe du cône. Une vanne commandée par servo-moteur, piloté par minuterie, s'ouvre pendant un temps donné entre deux durées de traitement. Là encore, le réglage est pointu: si l'ouverture est trop courte, ou si la durée entre deux ouvertures est trop longue, le filtre se remplit rapidement de boues, ne fait plus un travail correct et finit par être tellement colmaté qu'il peut devenir impossible d'assurer le démontage des cadres.

Inversement, si l'ouverture est trop longue, ou si la durée entre deux ouvertures est trop courte, du jus trouble va dans les boues, les recyclages sont trop importants et les éléments filtrant les boues de première sont surchargés.

Pour éviter tous les inconvénients cités ci-dessus, quelques demandes de brevets ont été déposées par le passé: toutefois, elles présentent toutes de gros défauts liés au fait que le média filtrant n'est jamais renouvellé de façon automatique.

La demande de brevet FR-A-1437727 fait état d'une filtration par bougies. Par rapport au système utilisé industriellement, les cadres à poches en toile sont remplacés par des bougies. Le décolmatage de celles-ci s'effectue par un choc de pression du à des ouvertures/fermetures programmées de vannes adéquates et à la détente d'air comprimé préalablement maintenu sous pression au niveau du couvercle.

Plusieurs défauts sont condamnables sur ce type d'appareil: les bougies sont longues et seulement maintenues par leur point haut sur une plaque; il s'ensuit que, lors de la détente brutale de l'air, beaucoup d'entre elles doivent casser juste en dessous de la plaque.

Le matelas d'air, constamment présent sous le couvercle, amène des possibilités d'infections par leuconostoc ou micro-organismes divers, fréquentes en sucrerie dès qu'il y a présence de points morts avec air.

Le circuit utilisé par le liquide de nettoyage des bougies est le même que celui du jus filtré et des boues. Toute erreur ou mauvais fonctionnement des vannes reliant ces circuits à ceux du nettoyage peuvent provoquer de graves incidents liés au passage d'acide dans des éléments basiques contenant un précipité de carbonate de calcium.

Lors du nettoyage, le filtre est arrété pour la production. Il y a donc besoin, là aussi, de plus de filtres que la simple nécessité liée à une homogénéité de production. Enfin, la complexité de fabrication des bougies rend coûteux la maintenance et l'exploitation d'un tel appareil.

La demande de brevet FR-A-2005887 reprend la filtration par bougies mais consiste à chausser celle-ci avec une toile: on revient à la filtration à cadres avec ses inconvénients. Par ailleurs, le col lecteur annulaire étant commun à toutes les bougies, il est impossible de l'isoler en cas de percement d'une toile.

Ces systèmes de filtration par bougies ne permettent pas de s'adapter aux variations de filtrabilité des jus dus à des traitements de type de betteraves différentes.

Les demandes de brevets FR-A-2140389 et FR-A-2464736 reprennent la filtration par plaques mais l'ensemble des cadres est mis en rotation par une mécanique importante et passent successivement dans des compartiments où il y a filtration, nettoyage du sédiment, évacuation de celui-ci au moyen d'air comprimé.

La demande de brevet FR-A-2140389 correspond à une aspiration du liquide à travers les cadres par vide, ce qui signifie en amont l'existence d'un matériel lourd et complexe tels que pompe à vide, ballon d'extraction, ballon de détente, pot de séparation de goutelettes, condenseur (15 mètres de haut minimum), etc...Le vide apporte une telle contrainte, que le brevet propose un système pour éviter une rupture des gâteaux, extrêmement fragile et délicat à mettre en oeuvre, et dont les frais de maintenance sont extrêmement élevés.

Le brevet FR-A-2464736 assure un débatissage des gâteaux à l'air comprimé.

Nous revenons aux mêmes problèmes que ceux décrits plus haut: infections des jus par micro-organismes, impossibilité d'isolement d'un élément en cas de rupture du média filtrant, obligation d'arrêter le filtre pour nettoyage dès que sa capacité filtrante diminue et non adaptabilité à des changements de réglages des paramètres de l'épuration.

Ces deux procédés ne permettent pas, eux non plus,d'adapter la filtration aux différents types de betteraves à traiter.

Notre d'invention consiste à mettre en oeuvre ledit procédé avec un appareil de filtration remplaçant les appareils 12 et 25 (voir schéma, du process classique de l'épuration sur la planche 1/3) évitant les contraintes décrites ci-dessus, grâce à l'avance automatique du média filtrant en fonction du degré de filtrabilité des jus à traiter.

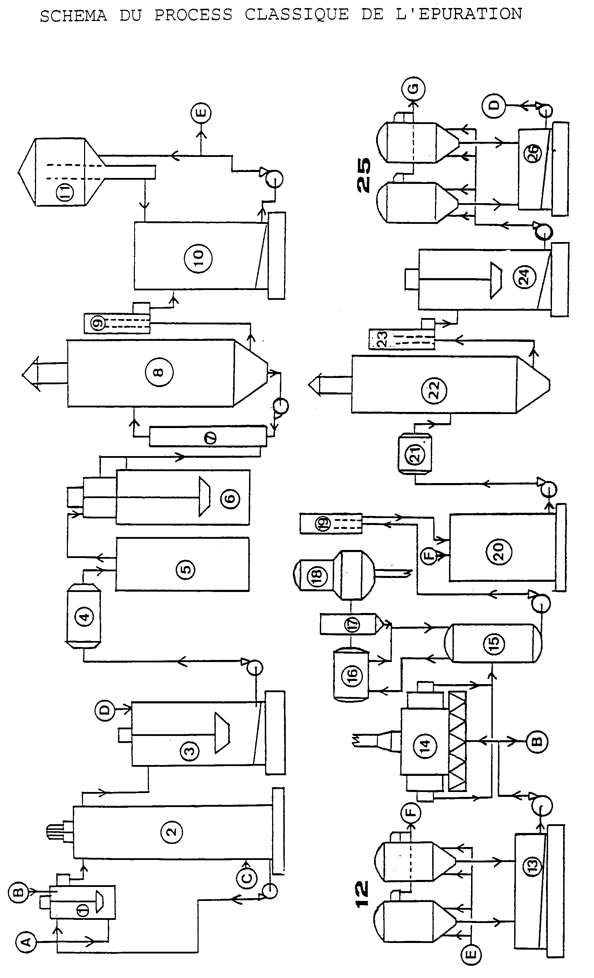

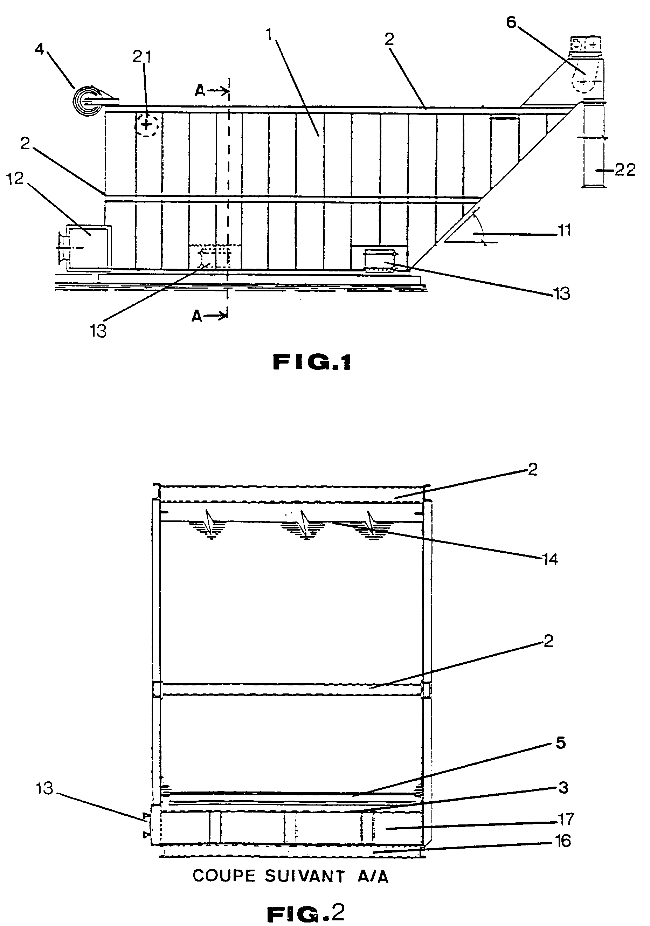

Plus précisement, l'appareil de filtration, décrit sur la figure n°1, se présente sous la forme d'un bac horizontal et parallèlépipédique(1), dont les longueur, largeur et hauteur dépendent de la nature du produit à traiter, du débit et de la filtrabilité. A titre indicatif, de tels appareils peuvent atteindre 2m de large,3m de haut, et 20m de long.

Des entretoises (2), constituées par des fers "U", situés en haut et au tiers de la hauteur du filtre, assurent la rigidité de l'ensemble.

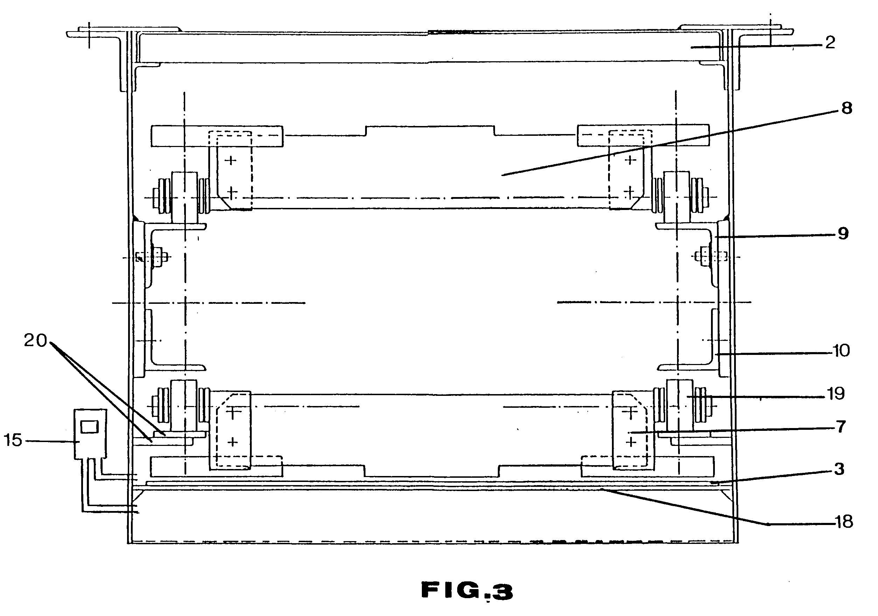

Le fond du bac est constitué de trois parties: un chassis(16), un compartiment de jus filtré (17), et un support de grille (18). (voir dessins 2/3 FIG 1 et 2 et 3/3 FIG 3).

Le chassis (16) est formé de deux fers "I" longitudinaux et d'une série de fers "U" transversaux soudés aux précédents. Le filtre repose sur ce chassis, ce qui permet d'éviter une usure prématurée de la tôle de fond due à la stagnation sur le sol de liquides divers provenant de nettoyages, de débordements, ou de condensations.

Le bas du bac est constitué par le compartiment de jus filtré (17) délimité par la tôle de fond et une série de fers "U" (18), transversaux, soudés sur des cornières horizontales, elles-mêmes soudées sur les flancs du bac (voir planche 2/2). Le pas des fers "U" transversaux correspondent aux longueurs des grilles de filtration (3), qui y sont vissées dessus de façon jointive.

Le compartiment de jus filtré (17) a une hauteur d'environ 60 à 80 cm et est accessible à l'arrêt par des trappes de visite (13).Elles sont utilisées lors de la visite annuelle de vérification de l'appareil et sont dimensionnées suivant les normes en vigueur.

Le média filtrant (papier ou tissu), se présente sous forme de rouleau (4), et se met en place à l'arrière du filtre sur un support adapté.Il est entrainé par un système de raclage (5), qui assure son placage contre les grilles d'une part, son entrainement et sa tension d'autres parts.

Ce système de râclage est constitué par une série de râcleurs (7), montés entre deux chaînes à maillons. A chaque extrémité des racleurs sont montés des galets (19) dont le débattement dans le sens de la largeur est limité par les flancs des maillons de la chaine, l'axe du galet étant le même que celui de la râclette et que celui du maillon de la chaîne. Les galets roulent sur des chemins de roulement (20) constitués de deux fers plats: un premier fer plat est soudé sur le flanc du bac, un deuxième est fixé sur le premier, ce qui permet un changement rapide en cas d'usure après quelques années. Le débattement du galet est limité en hauteur par une cornière (10), qui peut être, soit soudée, soit vissée sur une plaque soudée elle-même sur les flancs du filtre. Cette cornière fait office de chemin de roulement dans les zônes où les chaînes s'élèvent (voir page 12, ligne 30).

Les chaînes sont entrainées par des tourteaux classiques, reliés entre eux par un arbre dont le mouvement est assuré par un moto-réducteur (6). La tension des chaînes est réalisée par un système de tourteaux (21), montés sur un arbre semblable au premier et situé à l'arrière du filtre, légèrement devant et plus bas que le rouleau du média filtrant.

Le système d'entrainement (6) peut fonctionner, soit de façon continue, soit de façon discontinue. Dans ce dernier cas, un manostat (15) mesure la pression amont et aval de la grille; une comparaison est établie par rapport à une consigne; dès que la mesure est supérieure à la consigne, le système de râclage démarre et assure l'avance d'une portion de média filtrant neuf. Le réglage de la longueur de cette portion se fait à partir d'une minuterie commandant la durée de fonctionnement du système de commande.

Le renouvellement du média se fait donc directement à partir d'une mesure industrielle du degré de filtrabilité des jus: si le degré de filtrabilité est fort, la différence de pression amont/aval grille évoluera lentement dans le temps et la consommation de média filtrant sera faible; si, par contre, le degré de filtrabilité est faible, la différence de pression amont/aval grille évoluera vite et la consommation de média filtrant sera élevée. Mais en aucun cas l'usine ne sera ralentie ou arrêtée suite à des problèmes de filtration engendrés par des démarrages, par le traitement de betteraves dégelées, ou tout simplement par un mauvais réglage des paramètres de l'épuration.

Par ailleurs, le média filtrant n'avance a chaque fois que d'une partie de la longueur totale sur laquelle le jus est filtré. Cela évite le passage important d'éléments en suspension dans le jus filtré qui se produit inévitablement avec les techniques habituelles quand il y a redémarrage d'un filtre à média filtrant fraîchement lavé: la limpidité du jus filtré sera meilleure.

Notre système implique une élimination totale des arrêts: il s'agit donc bien d'une filtration continue sans intermittence. En particulier, les arrêts dus aux nettoyages, impliquant des manipulations de produits chauds et dangeureux, ainsi que d'éléments mécaniques lourds, sont définitivement supprimés. La simplicité de conduite assure une surveillance réduite au strict minimum (épaisseur du rouleau de média filtrant), ce qui permet l'affectation du personnel à des tâches plus plus enrichissantes.

Le retour (8) du système de râclage est assure par le roulement des galets sur leur chemin de roulement (9), constitué par des cornières vissées sur une plaque intermédiaire elle-même soudée sur le flanc du bac. L'angle de montée (11) du système de râclage dépend de la solidité du média filtrant et du type de liquide filtré. Il a été fixé, seulement à titre indicatif, à 45° sur la figure n°1 de la planche n° 2/3

Le média filtrant usagé, et le gâteau d'éléments solides séparés de la phase liquide-solide tombent par une goulotte (22) dans n'importe quel conteneur adapté à la réception des déchets.

Sur les flancs de la cuve, sont disposés, côté intérieur, et en certains points, des tôles planes, dont le but est d'assurer un guidage et une tension correcte des chaînes. Ces dispositifs sont fonction des domaines d'application dans lesquels est utilisé le filtre.

Le changement du rouleau de média filtrant s'effectue de la façon suivante: l'opérateur déroule la fin du rouleau précédent, enlève son carton d'enroulement, et met le nouveau rouleau qu'il agrafe à la fin de l'ancien rouleau. L'opération est très rapide.

Le jus filtré est aspiré par des pompes (non représentées) à partir d'un caisson d'aspiration (12).

Afin d'assurer un rendement optimal de l'installation, il est conseillé de fonctionner avec un niveau haut(14). Ce niveau peut être constant et assuré, soit par trop-plein avec retour au bac de jus trouble (cas appliqué en jus trouble 1: voir schéma du process classique de l'épuration sur la planche 1/3, appareils 10 et 11), soit régulé à partir d'un capteur de niveau agissant sur une vanne de régulation en aval de la pompe à jus trouble (cas appliqué en jus trouble 2: voir schéma du process classique de l'épuration sur la planche 1/3, appareil 24).

Le renouvellement du liquide à filtrer suivant un niveau haut va minimiser les surfaces au contact de l'air sur lesquelles se produit de la condensation et va ainsi éviter les risques de développement de micro-organismes, toujours à craindre dans les industries de traitement de jus sucrés.

Notre appareil de filtration, décrit ci-dessus (page n°9, ligne n°7 à page n°13, ligne n°31) peut sembler présenter des similitudes avec l'appareil décrit dans le brevet FR, A, 1 235 090 (G.HIRS) du 11 septembre 1959, utilisé, lui, dans le procédé de traitement de liquides de coupe des industries mécaniques. (voir page n°1, colonne droite, 2éme paragraphe, lignes n°5 à 7 et dernier paragraphe, lignes n°37 à 40 puis page n°2, colonne gauche, lignes n°1 et 2, et figure n°1 de ce dit brevet).

La technologie décrite dans ce brevet, s'est optimisée au cours des décennies par des améliorations dont les plus marquantes sont décrites dans les brevets US-A-4 865 724 (BRANDT et AL) du 12/09/89, DE-U-8 911 023 (BOLL et KIRSCH FILTERBAU GMBH) du 21/12/89 et DE-A-3 739 496 (FAB FILTERTECHNIK ANLAGENBAU) du 01/06/89.

Néanmoins, tous ces brevets ne concernent qu'un seul domaine d'application: celui du traitement des liquides de coupe (appelés aussi liquides de refroidissement) utilisés dans l'usinage de pièces mécaniques.

Les liquides de coupe, appelés aussi liquides de refroidissement, sont utilisés dans l'industrie mécanique, automobile en particulier, afin d'éliminer les copeaux et la chaleur produits lors de l'usinage des pièces par les machines outils.Les éléments solides à séparer lors d'une filtration seront donc des éléments métalliques de forte densité c'est-à-dire ayant une vitesse de décantation élevée, surtout au sein d'un liquide à phase émulsionnée eau-huile, favorisant ainsi le phénomène de filtration.Par ailleurs, ce liquide, de nature huileuse, aura tendance à favoriser par lubrification les phénomènes de glissement.

Dans l'appareil du brevet FR, A, 1 235 090, le système d'entrainement du média est construit au moyen de deux chaînes latérales (64) avec des entretoises (66) soudées ou assemblées par leurs extrémités aux maillons correspondants (page n°2, colonne gauche, paragraphe n°4, lignes n°48 à 56 et colonne droite, paragraphe n°1 , lignes n°1 à 6). Les chaînes reposent sur des brides horizontales (85, 86, 87) qui servent de glissières: page n°2, colonne droite, dernier paragraphe, lignes n°47 à 56 et page n°3, colonne gauche, 1èr paragraphe, lignes n°1 à 6: il y a donc glissement de l'ensemble mais pas roulement;cette conception ne peux pas être appliquée à des jus de sucrerie de nature collante.Dans ce même brevet, la prise de pression est assurée par un conduit (130) monté en dérivation sur le collecteur d'aspiration de la pompe et relié à un soufflet:voir page n°3, colonne droite, 2ème paragraphe, lignes n°12 à 16 et figure n°2:prendre la pression à cet endroit donne une grande imprécision à la mesure, fortement perturbée par l'aspiration très proche de la pompe et surtout le montage en dérivation risque de se boucher par les jus de nature collante. Il est spécifié, dans ce même brevet, que le pompage du liquide clair est assuré par une tuyauterie (59): voir figure n°2 et n°3, et page n°3, colonne droite, 3ème paragraphe, lignes n°36 et 37: cela engendre une perte de charge importante, d'autant plus néfaste que nous sommes à cet endroit en dépression, et en sucrerie, sur des liquides moussants, proches du point d'ébullition: il y a un risque important de cavitation de la pompe.Enfin, dans ce document, aucune dimension d'appareil n'est spécifiée; compte-tenu de la conception de l'entrainement du média, réalisé par prise en sandwich entre deux éléments en mouvement, cette capacité est certainement limitée.

Le brevet US-A-4 865 724 (BRANDT et AL) du 12/09/89 décrit un combiné d'appareils comprenant entre autres un filtre, et s'applique, comme le précédent, aux liquides de coupe pour machines outils (colonne n°1, lignes n°6 à 9; colonne n°2, lignes n°5 à 11; colonne n°5, lignes n°49 à 64, figure n°5; colonne n°6, lignes n°4 à 6 et lignes n°56 à 60; colonne n°7, lignes n°27 à 31). De plus cet ensemble assure le traitement d'huiles de coupe préalablement contaminées par des éléments gras flottants et (ou) par des éléments solides métalliques (colonne n°1, lignes n°16 à 27 et n°31 à 33; colonne n°2, lignes n°13 à 16; colonne n°4, ligne n°55; colonne n°5, lignes n°49 à 64, figure n°5 et colonne n°6, lignes n°4 à 6).Cet ensemble, comprenant des cuves, un déshuileur, un filtre, des pompes et des vannes d'alimentation est compact; il peut ainsi être monté sur une plate-forme pour être positionné auprès de n'importe quelle machine en quelque lieu que ce soit (colonne n°3, lignes n°5 à 11): sa capacité est donc très limitée en volume, en dimensions et en débit: 25 gpm (colonne n°4, ligne n°49), soit, si nous prenons un gallon U.S qui correspond à 3.78 litres, un débit de 220 litres/heure, c'est-à-dire 0.2 m3/h. L'alimentation de l'ensemble décrit dans le brevet US, A, 4 865 724 se fait par charges successives: le bac sale est rempli jusqu'à un certain niveau; on traite ce volume pendant un certain temps puis, après avoir fait un ajout automatique de liquide de coupe frais, (colonne n°2, lignes n°18 à 22 et colonne n°5, lignes n°1 à 16) l'ensemble est renvoyé vers la machine outil (colonne n°4, lignes n°8 à 15, lignes n°26 à 40 et n°51 à 68; colonne n°5, lignes n°25 à 38 et n°49 à 64):il n'y a donc pas traitement du liquide en continu. Enfin, ce brevet détaille très peu la technologie de construction du filtre, se limitant à reprendre l'arrière-plan technologique du brevet précédent: en particulier, il n'est pas spécifié de présence de galets sur les chaînes, ni de caisson d'aspiration sur lequel les pompes se branchent et la technologie de la prise de pression n'est pas abordée.

Le brevet DE-U-8 911 023 (BOLL et KIRSCH FILTERBAU GMBH) du 21/12/89 ne s'applique là encore qu'au traitement de liquides de coupe et lubrifiants des machines d'usinage et de formage (page n°1, lignes n°8 à 13) et ne porte que sur la mise en place d'une chambre spécifique, disposée à l'arrivée du média filtrant sur la grille (page n°9, lignes n°15 à 28 et page n°13, lignes n°9 à 18) pour éviter le passage des particules lors de la mise en place de la portion neuve du média filtrant, avant la constitution du gâteau qui, seul, permettra d'atteindre une qualité de filtration correcte; cette solution n'est pas sans rappeler la variante de construction proposée dans le brevet FR, A, 1 235 090: page n°4, colonne droite, premier paragraphe, lignes n°6 à 22 et figures n°13, 14, 15. Ce système présente une pompe supplémentaire, de nombreuses tuyauteries et vannes dans lesquelles la circulation du jus ne serait que très limitée dans le temps par rapport à la totalité du temps de fonctionnement de l' installation et qui seraient donc autant de zônes mortes favorisant le développement de micro-organismes tels que les leuconostoc. La proposition dérivée décrite sur la figure n°4 est encore pire par rapport à cet inconvénient car il y a une tuyauterie supplémentaire montée en dérivation (page n°11, lignes n°31 à 34), qui augmenterait encore le volume des zônes mortes. La description du filtre faite dans ce brevet est très générale (page n°6, lignes n°21 à 27) et reprend l'arrière-plan technologique de ce matériel; il est spécifié que l'avance des râcleurs se fait pas à pas (page n°7, lignes n°17 à 21) mais il n'est pas précisé la présence des galets dans les chaînes; l'installation proposée n'utilisant comme média que des tissus à base de nylon ( page n°1, lignes n°18 à 23, page n°2, lignes n°1 à 3, et page n°7, lignes n°1 à 3) extrèmement résistants à la traction, il n'y a certainement pas diminution des forces par la présence de galets. En ce qui concerne la prise de pression, il est spécifié que "la dépression dans la chambre à filtrat peut être surveillée pendant le processus de filtration à l'aide d'un manomètre à contact ou d'un appareil similaire" ( page n°8, lignes n°11 à 14) mais il n'est pas spécifié si le manomètre est branché sur le col lecteur d'aspiration de la pompe ou directement sur le bac et aucun élément sur les dessins ne permet de préciser cela. Il n'est nullement question d'une double prise de pression amont-aval de l'ensemble média-filtrant/grille. Par ailleurs, les pompes sont reliées au bac à jus filtré (4) par une tuyauterie de pompage (11), ( page n°7, lignes n°22 à 26 et figure n°1) et la chambre spécifique (17) est reliée à une pompe par une tuyauterie (20) ( page n°9 lignes n°20 à 23 et figure n°2). Enfin, aucune indication de capacité de l'installation n'est spécifiée.

Le brevet DE, A, 3 739 496 (FAB FILTERTECHNIK ANLAGENBAU) publié le 1/06/89 décrit encore une fois une application propre aux lubrifiants pour machines-outils:colonne n°2, lignes n°38 à 41 et apporte trois améliorations:
* présence d'un rouleau (12), entrainant les boues à la rupture de pente entre les éléments (6) et (11) (colonne n°1, lignes n°63 à 68 et colonne n°2, ligne n°1).
* présence d'une grille de séchage (5) (colonne n°2, lignes n°1 à 8)
* présence d'une chambre de réserve (4) située sous la partie (11): colonne n°2, lignes n°30 à 41, et qui correspond en fonctionnalité exactement au bac (15) du brevet DE-A-8 911 023: le bac est rempli pendant la filtration au moyen d'un collecteur dérivé du collecteur de refoulement du liquide filtré et il est vidé pendant la phase de régénération afin d'alimenter pendant ce moment-là les machines outils en liquide de coupe. Ces trois modifications, astucieuses, apportent un plus dans le domaine du traitement du liquide de coupe mais sont inapplicables dans le domaine sucrier:
* le rouleau d'entrainement des boues (12), est astucieux car les liquides de coupe, huileux, se prêtent au glissement, et une force supplémentaire appuyant sur l'ensemble "média-filtrant/gâteau", même si elle ajoute une contrainte supplémentaire à un bon entrainement de l'ensemble, ne génère pas d'impossibilité technique; mais il en va tout autrement avec les liquides collants de l'industrie sucrière où ce type d'astuce est à proscrire.
* la grille de séchage amènerait un développement de micro-organismes d'autant plus important qu'elle est située dans zône morte aérée et froide. L'application sur jus sucré impliquerait une formation importante de mousses, qui, par addition avec la structure intrinsèque de la grille favorisant déja, en elle-même, les surfaces de contact, permettrait un développement certain des micro-organismes.
* la chambre de réserve (4) présente, quant à elle, l'inconvénient de laisser pendant un certain temps du jus sucré en stagnation en présence d'un volume d'air au dessus (figure n°1, planche 2/3): toutes les conditions sont une fois encore réunies pour assurer un développement de micro-organismes.

Par ailleurs, nous retrouvons une description peu détailée du filtre, avec encore une fois la reprise de l'arrière-plan technologique (colonne n°1, lignes n°52 à 63, colonne n°2, lignes n°9 à 17 et lignes n°21 à 24): il n'y a aucun élément spécifiant l'utilisation de galets dans les maillons des chaînes. Il est écrit que la formation d'une couche de boue d'une certaine épaisseur "se manifeste par un accroissement de la dépression dans la chambre propre (3)" (colonne n°2, lignes n°20 et 21), mais rien n'explicite en quels endroits est branché le manostat et comment il fonctionne. Par ailleurs, il est spécifié que la chambre propre (3) est reliée à une pompe (20) par une conduite (21) (colonne n°2, lignes n°9 et 10, et figure n°1 et 2): il n'y a donc pas de caisson d'aspiration pour piéger les mousses et limiter la cavitation des pompes. Enfin aucun élément ne précise la capacité de l'appareil.

Par rapport aux matériels de filtration utilisés en sucrerie et ceux décrits dans les brevets mentionnés dans cette description aux pages n°7 et n°8 dans le cadre de notre analyse de la technologie de filtration sucrière,notre procédé de filtration ne possède pas d'éléments à usure rapide tels joints d'étanchéité ou éléments souples mécaniquement fragiles qui puissent engendrer un arrêt de fabrication. La maintenance, ainsi limitée à celle habituelle d'un moto-réducteur, et à la vérification annuelle des chaînes et chemins de roulements de l'ensemble de râclage, est simple et peu couteuse.

Par ailleurs, ce procédé, contrairement à celui décrit par d'autres brevets, n'utilise ni vide, ni air comprimé, dans quelque étape du cycle de filtration que ce soit.Cela économise un condenseur, appareil d'environ quinze mètres de haut sur trois mètres de diamètre (dans la partie supérieure), des pompes à vide dont le rendement dépend souvent de facteurs extérieurs tels que la température de l'eau des anneaux liquides, et une série de bacs séparateurs de goutelettes destinés à éviter les pertes de sucre ,ces goutelettes provenants de l'auto-évaporation des jus (température égale à 80°c). Voir appareils 15/16/17/18 des filtres rotatifs à écumes du schéma du process classique de l'épuration sur la planche 1/3.

La seule utilisation possible d'air comprimé consiste en un branchement d'une boucle de régulation pneumatique à partir du capteur de différence de pression. Ce débit, égal à celui d'un actionneur de vanne, est totalement négligeable comparé à celui utilisé par l'installation décrite sur la demande de brevet 1437727.

En résumé, ce procédé de filtration apporte, dans ce domaine d'application particulier, des économies:
* d'investissements: un seul de ces filtres doit , pour reprendre l'exemple d'une usine de 16000 tonnes de betteraves par jour, remplacer douze filtres en filtration de première et sept filtres en filtration de deuxième.
* de place: un filtre en remplaçant douze, le gain de place peut-être estimé à un facteur 10.
* d'exploitation:
   - surveillance simplifiée, réduite au minimum.
   - nettoyages supprimés.
   - manipulations de produits chauds et dangeureux supprimés.
   - arrêts et ralentissements dus aux variations de la filtrabilité des produits supprimés.
   - absence d'installations annexes telles que : production de vide, de vapeur ou d'air comprimé
* de maintenance: pas d'éléments à usure rapide.

D'autres applications en industries sucrières sont envisageables:
1°)Filtration des boues de première en sucrerie de betteraves: suppression des filtres rotatifs sous vide (appareil n°14 sur schéma du process classique de l'épuration page n°26) et de leurs annexes très coûteuses en exploitation et maintenance (appareils n°15,16,17,18 sur le même schéma page n°26)
2°)Filtration des sirops en sucrerie de betteraves: elle est faite actuellement par d'énormes filtres-presses à débatissage manuel.
3°)Filtration des jus d'épuration ,des boues de première, et des sirops en industrie sucrière de canne à sucre.

Il sera reconnu par les spécialistes versés en la matière que de nombreuses variantes et modifications peuvent être apportées au procédé sans sortir du cadre de l'invention, laquelle est définie par les revendications qui suivent.

## Revendications

1. Procédé de traitement en continu de jus, sirops et boues traités dans l'industrie sucrière et contenant des éléments solides, caractérisé en ce que, pour la filtration sans intermittence des dits liquides, l'on utilise un appareil de filtration comportant un média filtrant en bande qui est immergé dans les liquides à filtrer, qui est entrainé et déplacé, afin de renouveler la surface filtrante, sans aucune interruption de l'opération de filtration, en fonction du degré de filtrabilité des jus à traiter, et qui enfin est jeté avec le gâteau d'éléments solides séparés de la phase liquide-solide dans un conteneur de déchets.

2. Procédé selon la revendication n°1, caractérisé par son application en sucrerie de betteraves pour le traitement des jus troubles de première et de deuxième carbonatation.

3. Procédé selon la revendication n°1, caractérisé par son application en sucrerie de betteraves pour le traitement des boues de première carbonatation et pour celui des sirops.

4. Procédé selon la revendication n°1, caractérisé par son application en sucrerie de cannes pour le traitement de liquides comparables à ceux cités en sucrerie de betteraves: jus de première et de deuxième carbonatation, boues de première carbonatation, sirop.

5. Appareil de filtration pour la mise en oeuvre du procédé selon les revendications 1 à 4 étant constitué par un bac horizontal(1), dont la rigidité est assurée par des entretoises(2) situées environ au tiers de la hauteur et en haut de l'appareil, le bac(1) possédant en son fond une série de grilles jointives(3) fixées sur de fers d'appui(18) eux-mêmes solidaires des flancs du bac, le fond du bac constituant le compartiment à jus filtré(17) du dispositif, et en ce que l'alimentation en média filtrant s'effectue à partir de rouleaux(4) par entrainement au moyen d'un système de râclage(5), constitué par une série de râcleurs (7), guidé sur l'avant de l'appareil par le fond du bac dont l'inclinaison (11) dépend de la solidité du média et du type de liquides à filtrer, et entrainé par des chaînes au moyen de tourteaux fixés aux extrémités d'un arbre entrainé lui-même par un moto-réducteur (6) situé sur le haut, à l'avant du filtre, la tension des dites chaînes étant assurée par, d'une part un arbre mené, muni de tourteaux (21), semblable à l'arbre menant, et situé à l'arrière du filtre devant et légèrement plus bas que le rouleau de média filtrant (4), et, d'autre part, par des guides en tôle soudés, situés dans le bac (1), et dispoés de façon adéquate selon les liquides à traiter, ledit système de râclage (5) étant constitué de galets (19) montés sur les extrémités des râcleurs (7), dont l'axe est identique à celui des maillons de la chaîne d'entrainement, les galets roulant, côté grilles, sur des chemins de roulement (20) et côté supérieur du filtre, sur des chemins de roulement (9).

6. Appareil de filtration selon la revendication n°5, caractérisé par un dispositif de démarrage automatique commandé à partir d'un manostat (15) captant la pression en amont et en aval de l'ensemble média filtrant (4) et grille (3), la durée d'avancement du système de râclage (5) étant programmé par une minuterie dont le réglage dépend du type de jus à traiter et du niveau de qualité du jus filtré que l'on veut obtenir.

7. Appareil de filtration selon la revendication n°5 caractérisé par la présence d'un caisson d'aspiration (12) à partir duquel est pompé le dit liquide filtré.

8. Appareil de filtration selon la revendication n°5, caractérisé par des dimensions pouvant atteindre 2 mètres de large, 3 mètres de haut, et 20 mètres de long.

## Claims

1. Process for continuous processing of juices, syrups and slurries containing suspended solids, of the type commonly found in the sugar refining industry. This process is characterized by the use of an apparatus which filters the liquids continuously, using a continuous strip of filter material suspended in the liquid to be filtered. Displacement and drive of the filter strip is controlled on the basis of the filterability of the liquid being processed, so as to present a fresh filtering surface without requiring any interruption to the filtering process. The filter material is eventually discarded along with the retained solids removed from the liquid / solid suspension and disposed of in a waste container.

2. Process similar to that described in Claim No. 1, but characterized by application to the treatment of raw liquor from the first and second carbonation processes in the refining of sugar beet.

3. Process similar to that described in Claim No. 1, but characterized by application to the treatment of slurries from the first carbonation process and syrups in the refining of sugar beet.

4. Process similar to that described in Claim No. 1, but characterized by application to the refining of sugar cane in the processing of liquids similar to those described in the refining of sugar beet, i.e. the liquors resulting from the first and second carbonation processes, slurry from the first carbonation process, and syrups.

5. Filtering apparatus for carrying out the processes described in Claims 1 to 4, consisting of a horizontal tank (1), strengthened by cross beams (2) located one-third of the distance up each side and at the top of each side. This tank (1) is fitted at the bottom with a series of linked screens (3) attached to supporting rails (18) fixed to the sides of the tank. The bottom of the tank forms a reservoir (17) for the liquor that has been filtered by the system. The filter material is fed from rolls (4) and driven by a scraper system (5) consisting of a series of scrapers (7) guided at the front of the apparatus by the bottom of the tank which is inclined at an angle (11) depending on the strength of the filter material and the types of liquid being filtered. The scrapers are driven by chains around drums at the ends of a shaft which is itself driven by a motor and gearbox (6) located at the top of the tank and at the front of the filter. The chains are kept in tension on the one hand by a driven shaft fitted with drums (21), similar to the driving shaft, and located at the rear of the filter in front of, and slightly lower than the roll of filter material (4), and on the other hand by welded sheet metal guides located in the tank (1) and positioned to suit the liquids to be treated. The scraper system (5) includes sprocket wheels (19) mounted at the ends of the scrapers (7) whose pitch is equal to that of the links in the driving chain, and which turn in guideways (20) next to the screens and at the upper surface of the filter (9).

6. A filtering apparatus similar to that described in Claim 5, characterized by an automatic starting and stopping system controlled by a differential pressure gauge (15) sensing the pressure difference upstream and downstream of the filter material (4) and screen (3). The timing of the scraper movements is programmed by a timer adjusted to suit the type of liquor being treated and the quality of the filtered liquor desired.

7. A filtering apparatus similar to that described in Claim 5, characterized by the presence of a siphon chamber (12) from which the filtered liquor is pumped.

8. A filtering apparatus similar to that described in Claim 5, characterized by dimensions of up to 2 metres in width, 3 metres in height and 20 metres in length.

## Patentansprüche

1. Unterbrechungsfreies Aufbereitungsverfahren für Säfte, Sirups und Schlämme, die in der Zuckerindustrie verarbeitet werden und feste Elemente enthalten, dadurch gekennzeichnet, daß man bei der unterbrechungsfreien Filterung der oben genannten Flüssigkeiten ein Filtergerät benutzt, das ein Bandfiltermedium umfaßt, das in die zu filternden Flüssigkeiten eingetaucht und dann angetrieben und bewegt wird, damit die Filteroberfläche ohne Unterbrechung des Filterbetriebs erneuert wird, unter Berücksichtigung der Filterbarkeit der zu behandelnden Säfte, und das dann zusammen mit dem Kuchen der aus der Fest-Flüssigphase ausgeschiedenen Feststoffe in einen Abfallbehälter fällt.

2. Verfahren gemaß Anspruch 1, durch seine Anwendung in Zuckerrübenfabriken für die Aufbereitung von trüben Säften der ersten und zweiten Karbonatation gekennzeichnet.

3. Verfahren gemaß Anspruch 1 , durch seine Anwendung in Zuckerrübenfabriken für die Aufbereitung von Schlämmen der ersten Karbonatation und von Sirups gekennzeichnet.

4. Verfahren gemaß Anspruch 1, durch seine Anwendung in Zuckerrohrfabriken für die Aufbereitung von Flüssigkeiten gekennzeichnet, die mit denen in den Zuckerrübenfabriken vergleichbar sind: Säfte der ersten und zweiten Karbonatation, Schlämme der ersten Karbonatation, Sirup.

5. Filtergerät für die Durchführung des Verfahrens nach den Ansprüchen 1 bis 4, das aus einem waagerechten Behälter (1) besteht, dessen Festigkeit durch Abstandsteile (2) gewährleistet ist, die sich ungefähr am Drittel der Höhe und oben am Gerät befinden, wobei der Behälter (1) auf seinem Boden über eine Reihe von aneinandergrenzenden Gittern (3) verfügt, die an Stützeisen (18) befestigt sind, die wiederum mit den Flanken des Behälters fest verbunden sind, wobei der Boden des Behälters den Teil für den gefilterten Saft (17) des Geräts darstellt, und die Versorgung des Filtermediums erfolgt ausgehend von Walzen (4), die durch ein Abstreifsystem (5) angetrieben werden, das aus einer Reihe von Abstreifern (7) besteht und an der Vorderseite des Geräts durch den Boden des Behälters geführt wird, dessen Neigung (11) von der Festigkeit des Mediums und vom Typ der zu filternden Flüssigkeiten abhängt, und von Ketten mit Hilfe von Scheiben angetrieben wird, die an den Enden einer Welle befestigt sind, die wiederum durch einen Getriebemotor (6) angetrieben wird, der sich oben an der Vorderseite des Filter befindet, wobei die Spannung der besagten Ketten einerseits durch die angetriebene Welle mit den Scheiben (21) geführt wird, vergleichbar mit der Antriebswelle, die sich an der Rückseite des vorderen Filters befindet und leicht unter der Walze des Filtermediums (4) liegt, und andererseits durch geschweißte Blechführungen, die sich im Behälter (1) befinden und unter Berücksichtigung der aufzubereitenden Flüssigkeiten positioniert sind, wobei das besagte Abstreifsystem (5) aus Rollen (1) besteht, die auf den Enden der Abstreifer (7) montiert sind, deren Achse mit der der Glieder der Antriebskette identisch ist, wobei die Rollen gitterseitig auf Rollbahnen (20) und an der Oberseite des Filters auf Rollbahnen (9) laufen.

6. Filtergerät nach Anspruch 5, durch eine automatische Startvorrichtung gekennzeichnet, die durch einen Druckregler (15) gesteuert wird, der den Druck vor und hinter der Filterbaugruppe (4) und dem Gitter (3) erfaßt, wobei die Fortbewegungsdauer des Abstreifsystems (5) durch einen Zeitschalter programniert wird, dessen Einstellung vom Typ des aufzubereitenden Saftes und von der Qualität des gefilterten Saftes, die man erhalten möchte, abhängt.

7. Filtergerät gemäß Anspruch 5, durch das Vorhandensein eines Ansaugkastens (12) gekennzeichnet, von dem aus die besagte gefilterte Flüssigkeit gepumpt wird.

8. Filtergerät gemäß Anspruch 5, durch Abmessungen gekennzeichnet, die 2 Meter Breite, 3 Meter Höhe und 20 Meter Länge erreichen können.
